# EUROPEAN PATENT APPLICATION

(11) **EP 1 527 845 A2**
(43) Date of publication of application: **04.05.2005**
(21) Application number: 04256644.8
(22) Date of filing: 27.10.2004
(51) Int. Cl.: B23P 6/00

(54) **Method for repairing gas turbine compressor rotor blades**

(30) Priority: 31.10.2003 US 699354
(71) Applicant: GENERAL ELECTRIC COMPANY, Schenectady, NY 12345 (US)
(72) Inventor: Beneteau, Douglas Paul, Liberty Township, Ohio 45011 (US); Stewart, Matthew, Cincinnati, Ohio 45213 (US); Wilkins, Melvin H., Loveland, Ohio 45140 (US); De Carvalho, Raphael Rzepa, Rio de Janeiro 20260-131 (BR)
(74) Representative: Goode, Ian Roy

(57) **Abstract**

A method facilitates repairing a gas turbine engine compressor blade airfoil (20). The method comprises removing titanium alloy material (61) from along leading and trailing edges (34 and 36) of the airfoil, and along a radially outer tip (40) of the airfoil to form respective leading edge, trailing edge, and tip cut-backs (62, 64, and 66) which each define cut-back depths (D₁, D₃, D₂), and depositing titanium weld material onto the leading edge, trailing edge, and tip cut-backs. The method also comprises removing at least some of the titanium weld bead material to obtain pre-desired finished dimensions for the leading and trailing edges, and radially outer tip.

## Description

This application relates generally to gas turbine engines and, more particularly, to methods for repairing gas turbine engine rotor blades.

At least some known gas turbine engines include a compressor for compressing air which is mixed with a fuel and channeled to a combustor wherein the mixture is ignited within a combustion chamber for generating hot combustion gases. The hot combustion gases are channeled downstream to a turbine, which extracts energy from the combustion gases for powering the compressor, as well as producing useful work to propel an aircraft in flight or to power a load, such as an electrical generator.

Known compressors include a rotor assembly that includes at least one row of circumferentially spaced rotor blades. Each rotor blade includes an airfoil that includes a pressure side, and a suction side connected together at leading and trailing edges. Each airfoil extends radially outward from a rotor blade platform. Each rotor blade also includes a dovetail that extends radially inward from a shank coupled to the platform. The dovetail is used to mount the rotor blade within the rotor assembly to a rotor disk or spool. In at least some known compressors, the rotor blade is formed integrally with the rotor disk or spool.

During operation, leading and trailing edges of the blade and/or a tip of the compressor blade may deteriorate or become damaged due any of a number of distress modes, including, but not limited to, foreign object damage (FOD), tip rubbing, oxidation, thermal fatigue cracking, or erosion caused by abrasives and corrosives in the flowing gas stream. To facilitate mitigating such operational effects, the blades are periodically inspected for damage, and a determination of an amount of damage and/or deterioration is made. If the blades have lost a substantial quantity of material they are replaced. If the blades have only lost a little quantity material, they may be returned to service without repair. Alternatively, if the blades have lost an intermediate of material, the blades may be repaired.

For example, at least one known method of repairing a turbine compressor blade includes mechanically removing, such as by grinding a worn and/or damaged tip area and then adding a material deposit to the tip to form the tip to a desired dimension. The material deposit may be formed by several processes including welding and/or thermal spraying. Furthermore, special tooling is also used to achieve the precise dimensional relations between the original portion of the compressor blade and the added portion of the compressor blade. Thus, replacing a portion of a compressor blade may be a time-consuming and expensive process.

In one aspect of the present invention, a method of repairing a gas turbine engine compressor blade airfoil is provided. The method comprises preparing the surface by removing titanium alloy material from along leading and trailing edges of the airfoil, and along a radially outer tip of the airfoil to form respective leading edge, trailing edge, and tip cut-backs which each define cut-back depths, and depositing a titanium alloy material, or another suitable material, onto the leading edge, trailing edge, and tip cut-backs. The method also comprises removing at least some of the titanium alloy weld bead material to obtain pre-desired finished dimensions for the leading and trailing edges, and radially outer tip.

In another aspect of the invention, a method for repairing a gas turbine engine rotor blade including an airfoil is provided. The method comprises uncoupling a compressor rotor blade from the gas turbine engine, and machining titanium alloy material from along leading and trailing edges of the airfoil, and along a radially outer tip of the airfoil such that respective leading edge, trailing edge, and tip cut-backs are formed. The method also comprises depositing titanium alloy material, or another suitable material, onto each respective leading edge, trailing edge, and tip cut-backs, and contouring the titanium alloy weld bead material such that the repaired compressor rotor blade has a contour that substantially mirrors that of the original compressor rotor blade contour.

In a further aspect, a method for replacing a portion of a gas turbine engine rotor blade, is provided. The rotor blade includes an airfoil having a leading edge, a trailing edge, a first sidewall, and a second sidewall, wherein the first and second sidewalls define an airfoil contour. The method comprises machining titanium alloy material from along the airfoil leading and trailing edges, and along a radially outer tip of the airfoil such that respective leading edge, trailing edge, and tip cut-backs are formed, depositing titanium alloy material, or another suitable material, onto each respective leading edge, trailing edge, and tip cut-backs, and contouring the titanium alloy weld bead material such that the repaired airfoil has a contour that substantially mirrors that of the airfoil original contour.

Embodiments of the invention will now be described, by way of example, with reference to the accompanying drawings, in which:
Figure 1 is a perspective view of an exemplary aircraft gas turbine engine compressor blade;.
Figure 2 is an enlarged side view of a portion of the blade shown in Figure 1 and taken along area 2;
Figure 3 is a perspective view of the blade shown in Figure 1 during an intermediate stage of repair; and
Figure 4 is a perspective view of the blade shown in Figure 1 after the blade has been repaired and dimensionally restored.

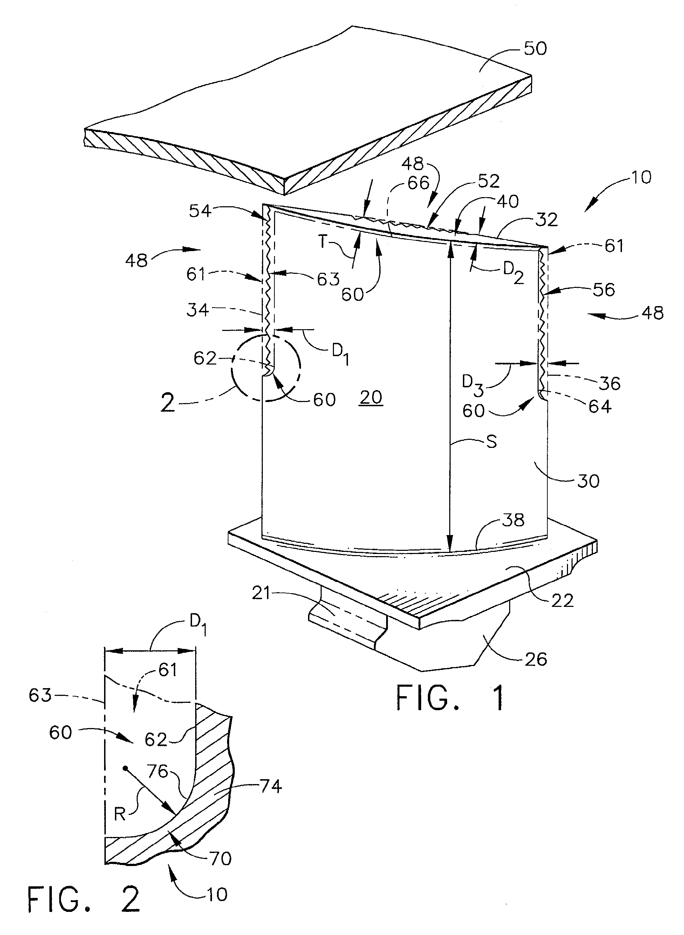

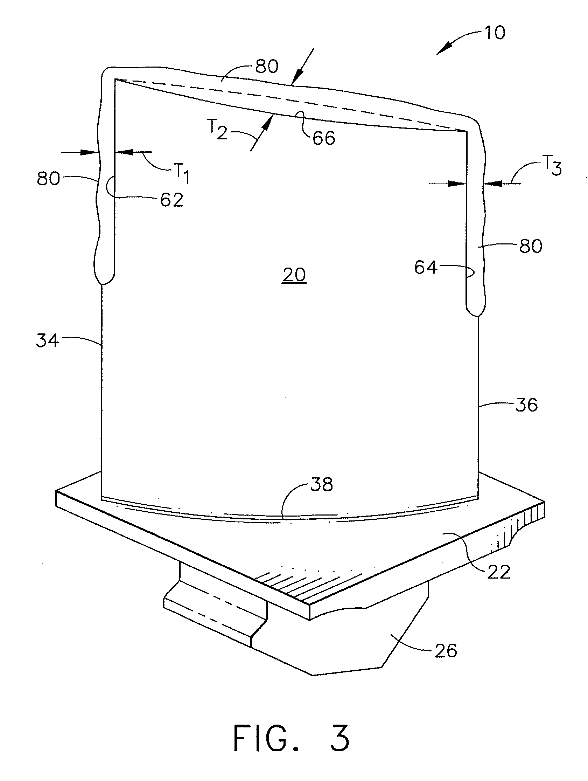

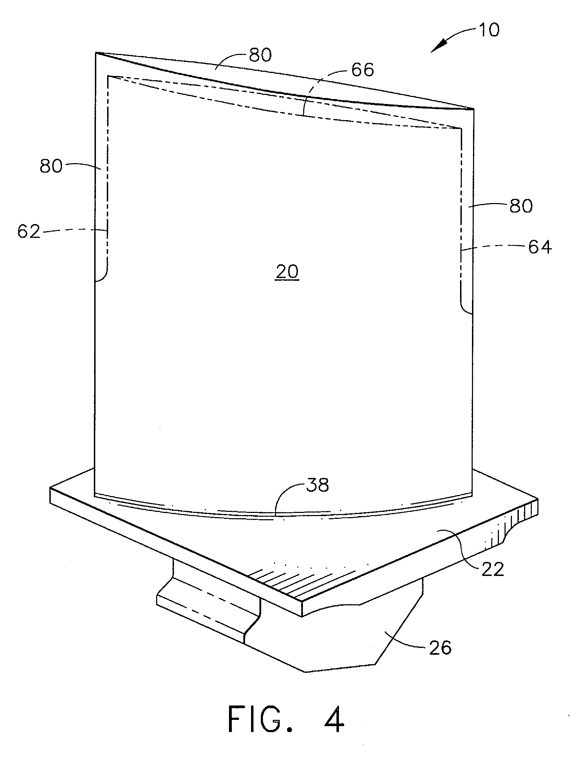

Figure 1 is a perspective view of an exemplary gas turbine engine rotor blade 10 for use in a gas turbine engine (not shown). Figure 2 is an enlarged side view of a portion of blade 10 taken along area 2. Figure 3 is a perspective view of blade 10 during an intermediate stage of repair. Figure 4 is a perspective view of blade 10 after blade 10 has been repaired and dimensionally restored using the methods described herein.

In the exemplary embodiment, rotor blade 10 is a compressor blade. Although only a single rotor blade 10 is shown, it should be realized that the turbine engine includes a plurality of rotor blades 10. Each rotor blade 10 includes an airfoil 20, a platform 22, a shank 24, and a dovetail 26. In the exemplary embodiment, blade 10 is fabricated from a titanium alloy.

Each airfoil 20 includes a first sidewall 30 and a second sidewall 32. First sidewall 30 is convex and defines a suction side of airfoil 20, and second sidewall 32 is concave and defines a pressure side of airfoil 20. Sidewalls 30 and 32 are joined at a leading edge 34 and at an axially-spaced trailing edge 36 of airfoil 20. More specifically, airfoil trailing edge 36 is spaced chord-wise and downstream from airfoil leading edge 34. First and second sidewalls 30 and 32, respectively, extend longitudinally or radially outward in span from a blade root 38 positioned adjacent platform 22, to an airfoil tip 40. A chord of airfoil 20 is defined as a line between leading edge 34 and trailing edge 36 at each cross section of airfoil 20.

During engine operation, portions 48 of blade 10 may become deteriorated, worn, and/or damaged. More specifically, during operation blade 10 may inadvertently rub against compressor casing and/or a shroud member 50 that extends circumferentially around rotor blades 10 when blades 10 are coupled within the engine. Such rubbing may cause tip damage 52, including burrs, nicks, and/or tears, across airfoil blade tip 40. Wear and foreign object damage (FOD) may also cause leading and trailing edge damage 54 and 56, including burrs, nicks, and/or tears across airfoil leading and trailing edges 34 and 36, respectively.

Deteriorated and/or damaged regions 48 of rotor blade 10 may be removed and replaced using the methods described herein. More specifically, deteriorated and/or damaged regions 48 may be removed and repaired using the methods described herein, to facilitate aerodynamically restoring blade 10. If an inspection indicates that rotor blade 10 includes at least one damaged and/or deteriorated portion 48, rotor blade 10 is removed and repaired using the methods described herein. More specifically, if a rotor blade 10 appears to include damaged and/or deteriorated portions 48, measurements are take to determine if pre-established reparability conditions have been satisfied. In one embodiment, reparability limits are based on a minimum blade thickness T and a maximum chord reduction which, in the exemplary embodiment, is approximately five percent of the chord.

After blade 10 has been determined to have deteriorated regions 48 that warrant repair, a plurality of cut-backs 60 are machined into blade 10. More specifically, titanium alloy material 61 is removed using a machining process from along airfoil leading and trailing edges 34 and 36, respectively, and from along airfoil tip 40. In the exemplary embodiment, titanium material along only radially outermost portions 63 of leading and trailing edges 34 and 36, respectively, extending from tip 40 towards blade root 38 is machined away. Moreover, in the exemplary embodiment, leading and trailing edge outermost portions 63 extend about half a span S of airfoil 20 between airfoil tip 40 and root 38. More specifically, in the exemplary embodiment, titanium material along only a radially outer half of airfoil 20 is removed. In alternative embodiments, titanium material from other areas of airfoil 20 is removed.

In the exemplary embodiment, as titanium material is removed, a plurality of cut-backs 62, 64, and 66 are formed along respective air airfoil leading and trailing edges 34 and 36, respectively, and along airfoil tip 40. Each cut-back 62, 64, and 66 has a respective depth D₁, D₂, and D₃ that is measured with respect to the original, unworn and undamaged, respective leading and trailing edges 34 and 36, and with respect to the original, unworn and undamaged, airfoil tip 40. More specifically, each depth D₁, D₂, and D₃ varies and is selected to facilitate removing portions of airfoil 20 containing tip damage 52, and portions of airfoil 20 containing leading and trailing edge damage 54 and 56, respectively. Accordingly, an amount of titanium alloy material 61 removed varies depending on the extent of damage or deterioration to airfoil 20.

As leading and trailing edge cut-backs 62 and 64, respectively, are formed, a filet or rounded corner 70 is formed between each leading edge and trailing edge cut-back 62 and 64, and the un-machined portions 74 of airfoil 20 extending between radially outermost portions 63 and blade root 38. In the exemplary embodiment, rounded corner 70 is a semi-circular corner having an arc 76 and a radius of curvature R. In an alternative embodiment, leading and trailing edge cut-backs 62 and 64, respectively, are formed without a rounded corner 70 and rather define an angular intersection with un-machined portions 74.

After titanium alloy airfoil material 61 has been removed, usually a plurality of beads of weld material 80 are welded into each respective cutback 62, 64, and 66. In an alternative embodiment, only one bead of weld material 80 is welded into each respective cutback 62, 64, and 66. In the exemplary embodiment, weld material 80 is fabricated from a titanium alloy that is the same alloy used in fabricating airfoil 20. In another embodiment, weld material 80 is fabricated from a material that is different than a material used in fabricating airfoil 20. More specifically, when coupled to airfoil 20, each weld bead has a respective thickness T₁, T₂, and T₃, that varies, but remains thicker than each respective cutback depth D₁, D₂, and D₃.

A portion of weld material 80 is machined to obtain the desired finished dimensions, or restored original dimensions, of airfoil 20, and more specifically, of airfoil leading and trailing edges 34 and 36, respectively, and of airfoil tip 40. More specifically, in the exemplary embodiment, weld bead material 80 is machined away to obtain the desired finished dimensions of leading and trailing edges 34 and 36, respectively, and radially outer tip 40 through a rough blending process, and then through a final blending process of the weld beads.

In the exemplary embodiment, weld bead material 80 is machined away to obtain the desired finished dimensions of the leading and trailing edges and radially outer tip by rough and then final blending of the weld beads. Desired finished dimensions of the leading edge is obtained by contouring of leading edge 34. Welding parameters and cut-back depths D₁, D₂, and D₃ are controlled to facilitate minimizing heat input and thus, to prevent airfoil deformation that would require further cold processing, and/or a coining process, to qualify airfoil 20 for use. The weld bead is manufactured with an automated plasma-arc weld process along the cut-back leading and trailing edges and radially outer tip. In one embodiment, a Liburdi Laws 500® automated welding center is used to form the weld beads.

In an alternative embodiment, the extent of damage to blade 10 are such that cut-backs 62, 64, or 66 are not needed, and rather, beads of weld material 80 are welded into each deteriorated and/or damaged region 48.

The above-described airfoil repair methods enable a titanium alloy airfoil having damage and/or deterioration extending along its leading and/or trailing edges, and/or along its airfoil tip, to be repaired in a cost-effective and reliable manner. More specifically, the above-described airfoil repair methods facilitate restoring a damaged and/or deteriorated blade to its original dimensions. Accordingly, titanium alloy material is removed from only along the deteriorated areas of the leading and trailing edges of the airfoil, and along a radially outer tip of the airfoil such that respective leading edge, trailing edge, and tip cut-backs which each define cut-back depths. The methods facilitate returning a damaged/deteriorated airfoil to its original aerodynamic profile and original dimensions. As a result, repair methods are provided that facilitate improved aerodynamic performance of a blade, while providing aeromechanical stability to the blade, in a cost effective and reliable manner.

Exemplary embodiments of blade repair methods are described above in detail. The repair methods are not limited to the specific embodiments described herein, but rather, components and aspects of each repair method may be performed and utilized independently and separately from other repair methods described herein. Moreover, the above-described repair methods can also be used in combination with other repair methods and with other rotor blade components.

## Claims

1. A method of repairing a gas turbine engine compressor blade airfoil (20), said method comprising:
removing titanium alloy material (61) from along leading and trailing edges (34 and 36) of the airfoil, and along a radially outer tip (40) of the airfoil to form respective leading edge, trailing edge, and tip cut-backs (62, 64, and 66) which each define cut-back depths (D₁, D₃, and D₂);
depositing titanium weld material (80) onto the leading edge, trailing edge, and tip cut-backs; and
removing at least some of the titanium weld material to obtain pre-desired finished dimensions for the leading and trailing edges, and radially outer tip.

2. A method in accordance with Claim 1 wherein removing titanium alloy material (61) further comprises machining away titanium alloy material along only the radially outermost portions (48) of the leading and trailing edges (34 and 36) extending from the tip (40) towards a base (38) of the airfoil (20).

3. A method in accordance with Claim 2 wherein machining away titanium alloy material (61) along only the radially outermost portions of the leading and trailing edges (34 and 36) further comprises forming a rounded corner (70) between the leading edge and trailing edge cut-backs (62 and 64) and un-machined portions (74) of the airfoil (20) extending between the leading and trailing edge outermost portions (48) and the base (38) of the airfoil (20).

4. A method in accordance with Claim 3 wherein forming a rounded corner (70) between the leading edge and trailing edge cut-backs (62 and 64) and un-machined portions (70) of the airfoil (20) further comprises forming a semi-circular corner that has a predetermined arc (76) and radius of curvature (R).

5. A method in accordance with Claim 2 wherein machining away titanium alloy material (61) along only the radially outermost portions (48) of the leading and trailing edges (34 and 36) further comprises machining away titanium alloy material along a length of about half a span of the airfoil (20) between the tip (48) and the base (38) of the airfoil.

6. A method in accordance with Claim 2 wherein machining away titanium alloy material (61) along only the radially outermost portions (48) of the leading and trailing edges (34 and 36) further comprises blending the titanium weld material (80).

7. A method in accordance with Claim 2 wherein machining away titanium alloy material (61) along only the radially outermost portions (48) of the leading and trailing edges (34 and 36) further comprises contouring the leading edge (34).

8. A method for repairing a gas turbine engine rotor blade ( 10), wherein the rotor blade includes an airfoil (20), said method comprises:
uncoupling a compressor rotor blade from the gas turbine engine; machining titanium alloy material (61) from along leading and trailing edges (34 and 36) of the airfoil, and along a radially outer tip (48) of the airfoil such that respective leading edge, trailing edge, and tip cut-backs (62, 64, and 66) are formed;
depositing titanium weld material (80) onto each respective leading edge, trailing edge, and tip cut-backs; and
contouring the titanium weld material such that the repaired compressor rotor blade has a contour that substantially mirrors that of the original compressor rotor blade contour.

9. A method in accordance with Claim 8 wherein machining titanium alloy material (61) further comprises machining away titanium alloy material from along only the radially outermost portions (48) of the leading and trailing edges (34 and 36) extending from the tip (48) towards a base (38) of the airfoil (20).

10. A method in accordance with Claim 9 wherein machining titanium alloy material (61) along only the radially outermost portions (48) of the leading and trailing edges (34 and 36) further comprises forming a rounded corner (62) between the leading edge and trailing edge cut-backs (62 and 64) and un-machined portions (70) of the airfoil (20) extending between the leading and trailing edge outermost portions and the base (38) of the airfoil.
